**Europäisches Patentamt**

**European Patent Office**

**Office européen des brevets**

(19)

(11) Veröffentlichungsnummer: **0 286 905 B1**

(12)

# EUROPÄISCHE PATENTSCHRIFT

(45) Veröffentlichungstag der Patentschrift: **28.07.93**

(51) Int. Cl.⁵: **H02K 29/00**

(21) Anmeldenummer: **88105064.5**

(22) Anmeldetag: **29.03.88**

(54) **Elektronisch kommutierter, kollektorloser Gleichstrommotor.**

(30) Priorität: **31.03.87 DE 3710658**

(43) Veröffentlichungstag der Anmeldung:
**19.10.88 Patentblatt 88/42**

(45) Bekanntmachung des Hinweises auf die
Patenterteilung:
**28.07.93 Patentblatt 93/30**

(84) Benannte Vertragsstaaten:
**AT BE CH DE ES FR GB IT LI LU NL SE**

(56) Entgegenhaltungen:
**EP-A- 0 180 120      EP-A- 0 182 702**
**DE-A- 2 756 626      DE-B- 1 218 503**
**DE-U- 8 612 858      FR-A- 2 439 501**
**US-A- 4 187 441**

(73) Patentinhaber: **Alcatel SEL Aktiengesellschaft**
**Lorenzstrasse 10**
**W-7000 Stuttgart 40(DE)**

(72) Erfinder: **Feigel, Josef, Dr.**
**Rennweg 76**
**W-8300 Landshut(DE)**
Erfinder: **Pfendler, Klaus**
**Im Tännle 9**
**W-7823 Bonndorf(DE)**

(74) Vertreter: **Pohl, Herbert, Dipl.-Ing et al**
**Alcatel SEL AG Patent- und Lizenzwesen**
**Postfach 30 09 29**
**W-7000 Stuttgart 30 (DE)**

Rank Xerox (UK) Business Services
(3.10/3.6/3.3.1)

**Beschreibung**

Die Erfindung betrifft einen elektrisch kommutierten, kollektorlosen Gleichstrommotor gemäß dem Oberbegriff des Anspruchs 1.

Aus der EP 0 182 702 A1 ist ein elektronisch kommutierter, kollektorloser Gleichstrommotor bekannt, dessen Läufer einen mehrpolig magnetisierten, mit diametral angeordneten Magnetstücken versehenen permanentmagnetischen Körper aufweist, der über einen zylindrischen Ring als magnetischer Rückschluß mit einer Welle verbunden ist und dessen mehrpolige Ständerwicklung von einem äußeren magnetischen Rückschluß umgeben ist. Der Ring ist dabei in geeigneter Weise durch nicht näher beschriebene strukturierte Glieder mit der Welle verbunden.

Elektronisch kommutierte Gleichstrommotoren finden heute in größerem Maße Verwendung in Geräten der Datenverarbeitung. Für diesen Verwendungszweck werden elektronisch kommutierte Gleichstrommotoren benötigt, die bei einem möglichst hohen Betriebsdrehmoment auch ein gutes dynamisches Verhalten, d.h. ein kleines Trägheitsmoment des Läufers und daher kurze Hochlauf- und Abbremszeiten, aufweisen.

Aus der DE 27 56 626 A1 ist ein Läufer für eine elektrische Maschine bekannt, der einen zylindrischen in Umfangsrichtung mehrpolig lateral magnetisierten Dauermagnetkörper aufweist. Im Innern des Dauermagnetkörpers sind koaxial ausgerichtete Hohlräume angeordnet, wodurch das Gewicht verringert wird. Derartige Läufer werden durch einen Spritz-, Preß- oder Spritzgießprozeß geformt, und während der Formung wird durch ein externes Magnetfeld die gewünschte Vorzugsrichtung erzeugt.

Diese Läufer weisen den Nachteil auf, daß sie technisch aufwendig hergestellt werden und trotz der Hohlräume, aber durch die Herstellungstechnologie bedingt, noch ein sehr hohes Gewicht aufweisen.

Der Erfindung liegt daher die Aufgabe zugrunde, einen elektronisch kommutierten, kollektorlosen Gleichstrommotor zu schaffen, der ein hohes Drehmoment erzeugt und gleichzeitig ein gutes dynamisches Verhalten besitzt.

Diese Aufgabe wird bei einem gattungsgemäßen Gleichstrommotor durch die kennzeichnenden Merkmale des Anspruchs 1 gelöst.

Vorteilhafte Ausgestaltungen der Erfindung sind den übrigen Ansprüchen und der Beschreibung zu entnehmen.

Ein Ausführungsbeispiel der Erfindung wird im folgenden unter Bezug auf die Figuren 1 bis 3 beschrieben. Es zeigen:

Fig. 1     ein Ausführungsbeispiel des erfindungsgemäßen elektronisch kommutierten, kollektorlosen Gleichstrommotors im Längsschnitt,

Fig. 2     den Läufer aus Fig. 1 ohne Welle im Querschnitt, und

Fig. 3     den Läufer aus Fig. 1 in der Seitenansicht.

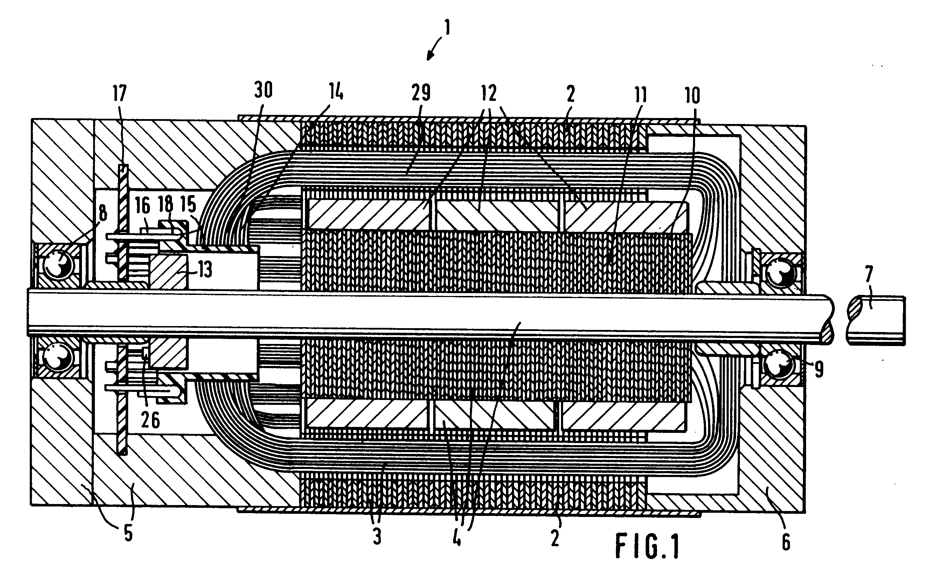

Der erfindungsgemäße elektronisch kommutierte, kollektorlose Gleichstrommotor 1 ist in Fig. 1 abgebildet. Er weist einen Ständer 3 mit einem äußeren magnetischen Rückschluß 2, einen Läufer 4 mit einem inneren magnetischen Rückschluß 11 und zwei Lagerschilde 5, 6 auf. Der Ständer 3 besteht aus einer Ständerwicklung 14, die als Trommelwicklung ausgebildet ist und die in einem Wickelkopf 30 einen fest fixierten zylinderischen Kunststoffring 15 aufweist. Die Ständerwicklung 14 ist freitragend ausgebildet. Die Wicklungsenden 18 sind über eine kreisförmige Anordnung von u-förmig gebogenen Hakenösen 16, die in einem zylindrischen Kunststoffring 15 befestigt sind, geführt. Die Wicklungsenden 18 sind mit den Hakenösen 16 verschweißt, die Hakenösen 16 sind wiederum mit einer Platine 17 verlötet. Zwei Hallsensoren 26 sind in einer Ausnehmung des zylindrischen Kunststoffringes 15 formschlüssig angeordnet und dabei noch mit der Platine 17 verlötet. Die Platine 17 ist formschlüssig mit dem Lagerschild 5 verbunden.

Die Ständerwicklung 14 und der äußere magnetische Rückschluß 2 sind so aufgebaut, daß der Ständer 3 in axialer Richtung in den magnetischen Rückschluß 2 eingeschoben werden kann. Hierzu weist ein aus Dynamoblech geschichtetes Blechpaket als äußerer magnetischer Rückschluß 2 eine Ausnehmung mit kreisförmigem Querschnitt und axial verlaufenden Nuten auf, in denen die Wicklungsstränge 29 der Ständerwicklung 14 angeordnet sind. Durch diese Anordnung wird eine gute magnetische Kopplung erzeugt.

Der Läufer 4 weist eine Welle 7, die über zwei Lager 8, 9 mit den Lagerschilden 5, 6 verbunden ist, den inneren magnetischen Rückschluß 11 mit einem darauf befindlichen mehrpolig magnetisierten permanentmagnetischen Körper 12 und einen ringförmigen Sensormagneten 13 zur Positionsbestimmung auf. In montiertem Zustand befindet sich der Sensormagnet 13 im Innern des zylindrischen Kunststoffringes 15 im Bereich der Hallsensoren 26.

Der innere magnetische Rückschluß 11 besteht aus einem Stahlzylinder oder aus einer aus Dynamoblechen 10 geschichteten Zylinderwalze. Er weist eine mittlere kreisförmige Ausnehmung 40 mit axial eingeprägten Nuten 35 auf, in der die Welle 7 formschlüssig angeordnet ist. Zur Reduzierung des Trägheitsmoments D weist der innere magnetische Rückschluß 11 noch weitere, nierenförmige Ausnehmungen 41 auf. Der mehrpolig magnetisierte permanentmagnetische Körper 12 ist auf der Mantelfläche des magnetischen Rückschlusses 11 aufgebracht und in radialer Richtung magnetisiert. Der permanentmagnetische Körper 12 besteht aus Magnetstücken 42, die Teil von diametral unterteilten Magnetringen oder Teil von axial eingebetteten Magnetstäben sind.

Die Form der Durchdringungen 41 resultiert aus der Optimierung der Aufgabe des magnetischen Rückschlusses, nämlich der magnetischen Kopplung, die durch einen massiven magnetischen Rückschluß am besten verwirklicht wäre und der Forderung einer möglichst hohen Dynamik des Gleichstrommotors, die beim erfindungsgemäßen Gleichstrommotor durch ein möglichst kleines Trägheitsmoment D angestrebt wird. Für das Trägheitsmoment D gilt:

$$D = \sum \Delta m_i \; r_i^2$$

mit $r_i$ als Abstand eines Massenelements $\Delta m_i$ zur Drehachse. Hieraus wird deutlich, daß die Massenelemente $\Delta m_i$ mit großem Abstand $r_i$ zur Drehachse das Trägheitsmoment D maßgeblich bestimmen und daß bei der Ausgestaltung der Ausnehmungen 41 die Form im Bereich großen Abstandes $r_i$ besonders wichtig ist.

Gerade die Massenelemente $\Delta m_i$ mit größerem $r_i$ tragen aber wesentlich zum magnetischen Rückschluß des mehrpolig magnetisierten permanentmagnetischen Körpers 12 bei. Die optimale Ausführung des erfindungsgemäßen Gleichstrommotors 1 liegt dann vor, wenn berücksichtigt ist, daß die Magnetstücke 42 in diametraler Richtung einen unterschiedlich starken Rückschluß benötigen. So ist der magnetische Fluß in diametraler Richtung in einem Bereich 43 zwischen zwei Magnetstücken am stärksten, was einen in diesem Bereich 43 größeren Rückschluß erfordert.

Der innere magnetische Rückschluß 11 weist daher im Querschnitt betrachtet einen inneren Ring 44 und einen äußeren Ring 45 auf, die durch Stege 46 miteinander verbunden sind. Die Stege 46 sind an den Bereichen 43 zwischen den Magnetstücken 42 angeordnet. Der äußere Ring 45 weist dabei in der Mitte zwischen den Stegen 45 die geringste Dicke auf, die zu den Stegen 46 hin zunimmt. Der Übergang vom äußeren Ring 45 zu den Stegen 46 verläuft fließend. Die Freiräume zwischen den beiden Ringen 45, 46 und zwischen benachbarten Stegen 46 weisen somit einen nierenförmigen Querschnitt auf.

Anstelle der nierenförmigen Ausnehmungen 41 können auch nur einfach Bohrungen angeordnet sein (keine Abbildung), die sicherlich eine Abweichung von der optimalen Geometrie darstellen, aber gerade bei Verwendung eines Stahlzylinders als innerer magnetischer Rückschluß 11 eine kostengünstige Ausführung darstellen.

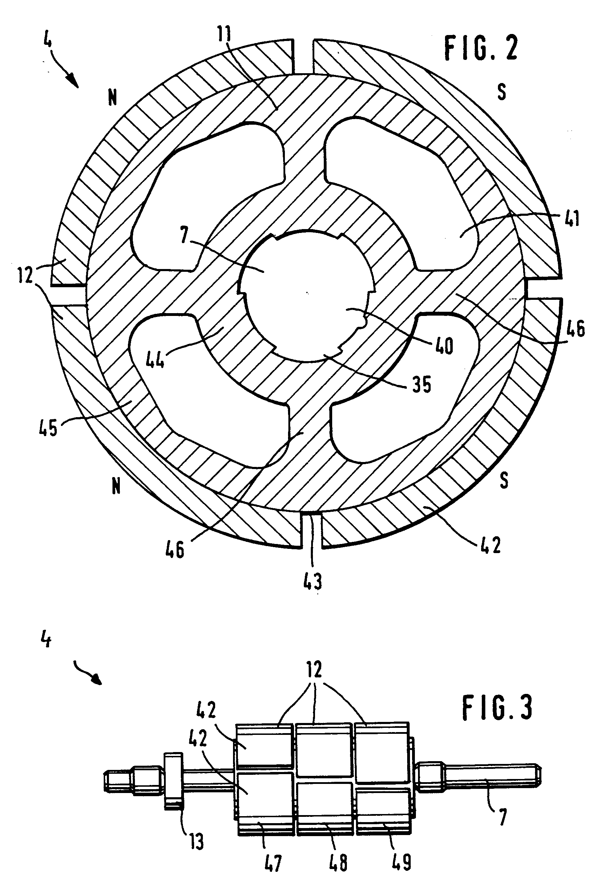

Zur Reduzierung des Rastmoments, das besonders bei niedriger Polzahl auftritt, ist der mehrpolig magnetisierte permanentmagnetische Körper 12 in drei Magnetsegmente 47, 48, 49, die diametral jeweils um einen Winkel α verschoben angeordnet sind, aufgeteilt (Fig. 3). In diesem Fall sind die Stege 46 im Bereich 43 zwischen den Magnetstücken 42 des mittleren Magnetsegments 48 angeordnet, wie dies auch in Fig. 2 abgebildet ist. Die Stege und die Bereiche zwischen den Magnetstücken der äußeren Magnetsegmente 47 und 49 sind somit um +α und -α verschoben zueinander angeordnet. Zur Reduzierung des Rastmoments können die einzelnen Bleche, wenn der innere magnetische Rückschluß ein Blechpaket aufweist, wendelförmig verdrallt angeordnet sein, wobei der permanentmagnetische Körper nur ein Magnetsegment aufweist. Diese Lösungen haben zwar einen schlechteren magnetischen Rückschluß, aber dafür ein geringeres Restdrehmoment zur Folge.

Es ist auch denkbar, den inneren magnetischen Rückschluß 11 ebenfalls axial in drei Teile zu untergliedern und diese jeweils optimal zu den entsprechenden Magnetsegmenten anzuordnen.

## Patentansprüche

1. Elektronisch kommutierter, kollektorloser Gleichstrommotor (1) mit einem mehrpolig magnetisierten, diametral angeordnete Magnetstücke (42) aufweisenden permanentmagnetischen Körper (12), mit einem eine Welle (7) und einen inneren magnetischen Rückschluß (11) aufweisenden Läufer (4) und mit einer den Läufer (4) umgebenden mehrpoligen Ständerwicklung (14), die außen von einem magnetischen Rückschluß (2) umgeben ist, **dadurch gekennzeichnet,** daß der Querschnitt des inneren magnetischen Rückschlusses (11) einen inneren Ring (44) und einen äußeren Ring (45) aufweist, und daß die beiden Ringe (44, 45) durch mehrere jeweils im Bereich zwischen den Magnetstücken (42) angeordnete Stege (46) miteinander verbunden sind.

2. Gleichstrommotor nach Anspruch 1, dadurch gekennzeichnet, daß der äußere Ring (45) an unterschiedlichen Stellen eine unterschiedliche Dicke aufweist, wobei die Dicke in der Mitte zwischen zwei Stegen (46) am geringsten und an den Stegen (46) am größten ist.

**3.** Gleichstrommotor nach einem der Ansprüche 1 oder 2, dadurch gekennzeichnet, daß die Stege (46) wenigstens in den äußeren Ring (45) fließend übergehen.

**4.** Gleichstrommotor nach einem der Ansprüche 1 bis 3, dadurch gekennzeichnet, daß der permanentmagnetische Körper (12) radial magnetisiert ist.

**5.** Gleichstrommotor nach einem der Ansprüche 1 bis 4, dadurch gekennzeichnet, daß der permanentmagnetische Körper (12) in mehrere axiale Magnetsegmente (47, 48, 49) aufgeteilt ist, daß diese Magnetsegmente (47, 48, 49) diametral zueinander versetzt angeordnet sind und daß die Stege (46) im Mittel zwischen den Magnetstücken (42) angeordnet sind.

**6.** Gleichstrommotor nach einem der Ansprüche 1 bis 5, dadurch gekennzeichnet, daß der innere magnetische Rückschluß (11) aus einem Stahlzylinder oder aus einer aus Dynamoblech geschichteten Zylinderwalze besteht.

**7.** Gleichstrommotor nach einem der Ansprüche 1 bis 6, dadurch gekennzeichnet, daß der permanentmagnetische Körper (12) aus einem oder mehreren Magnetringen oder aus Magnetstäben gebildet ist.

**Claims**

**1.** An electronically commutated, collectorless direct-current motor (1) with a multipolar permanent-magnet body (12) provided with diametrically arranged magnetic pieces (42), with a rotor (4) having a shaft (7) and an internal magnetic yoke (11), and with a multipolar stator winding (14) surrounding the rotor (4) and surrounded outside by a magnetic yoke (2),
**characterized in** that the cross section of the internal magnetic yoke (11) comprises an internal ring (44) and an external ring (45), and that the two rings (44, 45) are connected with one another by several links (46) each located in the area between the magnetic pieces (42).

**2.** A direct-current motor as claimed in claim 1,characterized in that the outer ring (45) has a different thickness at different points, the thickness being smallest at the center between two links (46) and largest at the links (46).

**3.** A direct-current motor as claimed in claim 1 or 2, characterized in that the transition from the links (46) to at least the outer ring (45) is gradual.

**4.** A direct-current motor as claimed in any one of claims 1 to 3, characterized in that the permanent-magnet body (12) is magnetized radially.

**5.** A direct-current motor as claimed in any one of claims 1 to 4, characterized in that the permanent-magnet body (12) is divided into several axial magnet segments (47, 48, 49), that these magnet segments (47, 48, 49) are diametrically displaced in relation to each other, and that on an average, the links (46) are arranged between the magnetic pieces (42).

**6.** A direct-current motor as claimed in any one of claims 1 to 5, characterized in that the internal magnetic yoke (11) is a steel cylinder or a cylinder built up of dynamo sheets.

**7.** A direct-current motor as claimed in any one of claims 1 to 6, characterized in that the permanent-magnet body (12) is formed by one or more annular magnets or magnetic bars.

**Revendications**

**1.** Moteur à courant continu (1), sans collecteur, à commutation électronique, comportant une pièce à aimantation permanente (12), magnétisée en mode multipolaire et constituée d'éléments magnétiques (42) disposés diamétralement, comportant aussi un rotor (4) présentant un arbre (7) et une couronne intérieure (11) de fermeture du circuit magnétique ainsi qu'un bobinage de stator (14) multipolaire, entourant le rotor (4) et entouré extérieurement d'une couronne (2) de fermeture du circuit magnétique,
moteur caractérisé par le fait que la section de la couronne intérieure (11) de fermeture du circuit magnétique est constituée d'une couronne intérieure (44) et d'une couronne extérieure (45), et par le fait que les deux couronnes (44, 45) sont reliées l'une à l'autre par plusieurs barrettes (46) respectivement disposées dans la zone existant entre les éléments magnétiques (42).

**2.** Moteur à courant continu selon la revendication 1, caractérisé en ce que la couronne extérieure (45) présente une épaisseur différente en des points différents, l'épaisseur étant la plus faible à mi-distance entre deux barrettes (46) et la plus élevée au niveau des barrettes (46).

3. Moteur à courant continu selon l'une des revendications 1 ou 2, caractérisé par le fait que les barrettes (46) font une transition continue au moins avec la couronne extérieure (45).

4. Moteur à courant continu selon l'une des revendications 1 à 3, caractérisé par le fait que la pièce à aimentation permanente (12) est magnétisée radialement.

5. Moteur à courant continu selon l'une des revendications 1 à 4, caractérisé par le fait que la pièce à aimantation permanente (12) est divisée en plusieurs secteurs magnétiques axiaux (47, 48, 49), que ces secteurs magnétiques (47, 48, 49) sont disposés diamétralement décalés l'un par rapport à l'autre et que les barrettes (46) sont disposées au milieu entre les éléments magnétiques (42).

6. Moteur à courant continu selon l'une des revendications 1 à 5, caractérisé par le fait que la couronne intérieure (11) de fermeture du circuit magnétique est constituée d'un cylindre d'acier ou d'un rouleau cylindrique constitué d'une pile de tôles dynamo.

7. Moteur à courant continu selon l'une des revendications 1 à 6, caractérisé par le fait que la pièce à aimantation permanente (12) est formée d'une ou de plusieurs couronnes magnétiques ou de barreaux magnétiques.

FIG.1

FIG. 2

FIG.3